# EUROPÄISCHE PATENTSCHRIFT

(11) **EP 2 721 264 B1**
(45) Veröffentlichungstag und Bekanntmachung des Hinweises auf die Patenterteilung: **26.10.2016**
(21) Anmeldenummer: 12728071.7
(22) Anmeldetag: 15.06.2012
(51) Int. Cl.: F01N 3/20, F01N 9/00, F01N 3/28

(54) **VORRICHTUNG MIT EINEM ELEKTRISCH BEHEIZBAREN WABENKÖRPER UND VERFAHREN ZUM BETREIBEN DES WABENKÖRPERS**
DEVICE HAVING AN ELECTRICALLY HEATABLE HONEYCOMB BODY, AND METHOD FOR OPERATING THE HONEYCOMB BODY
DISPOSITIF POURVU D'UN CORPS ALVÉOLÉ POUVANT ÊTRE CHAUFFÉ ÉLECTRIQUEMENT ET PROCÉDÉ DESTINÉ À FAIRE FONCTIONNER LEDIT CORPS ALVÉOLÉ.

(30) Priorität: 15.06.2011 DE 102011104193
(43) Veröffentlichungstag der Anmeldung: 23.04.2014
(73) Patentinhaber: Continental Automotive GmbH, 30165 Hannover (DE)
(72) Erfinder: HODGSON, Jan, 53840 Troisdorf (DE); VORSMANN, Christian, 51105 Köln (DE)
(86) Internationale Anmeldenummer: PCT/EP2012/061391
(87) Internationale Veröffentlichungsnummer: WO 2012/172033

(56) Entgegenhaltungen:
- EP-A1- 0 503 445
- EP-A1- 0 541 190
- DE-A1- 2 719 252
- JP-A- 3 181 337
- US-A- 4 272 668
- US-A- 5 321 231
- US-A- 5 388 404

## Beschreibung

Die vorliegende Erfindung betrifft eine Vorrichtung zur katalytischen Umsetzung oder anderweitigen Behandlung von Abgasen in einem Abgassystem, insbesondere in einem Abgasreinigungssystem eines Kraftfahrzeuges. Sie weist einen in einem Mantelrohr angeordneten, von einem Abgas durchströmbaren und elektrisch beheizbaren Wabenkörper auf. Die Erfindung betrifft auch ein Verfahren zum Betreiben eines solchen elektrisch beheizbaren Wabenkörpers. Der Wabenkörper weist dazu eine Stromleitstruktur auf, an die eine stromerzeugende Spannung angelegt werden kann.

Um die Temperatur von Abgasen einer Verbrennungskraftmaschine und gegebenenfalls die Temperatur einer Abgasreinigungskomponente zu beeinflussen, ist es bekannt, das Abgas und/oder die Abgasreinigungskomponente mit einer Heizeinrichtung zu beeinflussen. Es wird dabei angestrebt, die Temperatur des Abgases beziehungsweise der Abgasreinigungskomponente über eine kritische Temperatur zu erhöhen, so dass eine katalytische Reaktion der Schadstoffe im Abgas mit einer katalytischen Beschichtung der Abgasreinigungskomponenten stattfinden kann. Dies ist insbesondere wünschenswert bei Kalt- oder Neustartvorgängen der Verbrennungskraftmaschine. Auch bei anderen Vorgängen in einer Abgasreinigungsanlage müssen bestimmte Temperaturbereiche eingehalten werden, um eine gute Reinigung zu erzielen. Dies betrifft insbesondere die Regeneration von Partikelfiltern und Adsorbern.

Als Heizeinrichtungen wurden bereits Wabenkörper mit Stromleitstrukturen vorgeschlagen, die beim Anlegen einer Spannung durch Ohmsche Widerstandserwärmung das Abgas und/oder eine Abgasreinigungskomponente erwärmen. Solche Wabenkörper sind beispielsweise in der WO 89/10471 und der WO 89/10472 beschrieben. Dort werden die Stromleitstrukturen durch Metallfolien gebildet, die gegebenenfalls strukturiert und aufgewickelt werden. Aufgrund des geringen spezifischen Widerstands der Metallfolien ist es jedoch schwierig, Stromleitstrukturen herzustellen, die bei einer Betriebsspannung von 24 V [Volt] oder höher, bei der es sich im Allgemeinen um eine Gleichspannung handelt, nicht zu hohe Leistung aufnehmen und dann schmelzen oder die Stromversorgung zerstören. Der Widerstand der Stromleitstruktur wird daher beispielsweise durch eine mäanderförmige Ausbildung der Metallfolien erhöht, wozu allerdings elektrisch isolierende Spalte oder Isolierschichten zwischen den Folien gebildet werden müssen.

Um bei einer Erhöhung der Bordspannung eines Kraftfahrzeuges, also der Spannung mit der die Verbraucher des Kraftfahrzeuges versorgt werden, weiterhin eine bestimmte Heizleistung in der Stromleitstruktur zu erzielen, müsste der Widerstand der Stromleitstruktur erhöht werden, was im allgemeinen durch eine feinere Unterteilung durch Spalte und/oder elektrische Isolierschichten erreichbar ist. Mit der Erhöhung der Bordspannung eines Kraftfahrzeugs auf z. B. 48 V wird aber die Gefahr eines Versagens der Isolierung größer, z. B. durch Lichtbogen oder ähnliche Mechanismen.

Aus der US 5,321,231 A ist ein elektrisches System mit 12 Volt Batterie zur Aufheizung eines Wabenkörpers bekannt. Dabei werden zwei Betriebsverfahren vorgeschlagen. Das eine ist auf die Aufheizung des Wabenkörpers bei erhöhter Spannung gerichtet, das andere wird zum Halten der Temperatur bei geringer Spannung eingesetzt.

Die EP 0 541 190 A1 schlägt einen elektrisch beheizbaren Wabenkörper vor, der durch eine unterschiedliche, parallele und/oder serielle Anordnung von Widerständen für unterschiedliche Spannungsversorgungen geeignet ist.

US 5,388,404 A ist auf eine Batterie-schonende Aufheizung eines Wabenkörpers gerichtet, wobei Abgasemissionen in Folge eines Kaltstarts vermieden werden sollen. Dabei soll eine Aufheizung erst nach Betätigung eines Zündschlosses erfolgen. Erst wenn die Betriebstemperatur des Wabenkörpers erreicht ist, wird der Start der Verbrennungskraftmaschine ermöglicht.

Es ist daher Aufgabe der vorliegenden Erfindung, die mit Bezug auf den Stand der Technik geschilderten Probleme zumindest teilweise zu lösen und insbesondere eine Vorrichtung zur Behandlung, insbesondere katalytischen Umsetzung, von Abgasen und ein Verfahren zum Betreiben eines elektrisch beheizbaren Wabenkörpers anzugeben, die das Aufheizen des Abgases einer Verbrennungskraftmaschine und/oder einer Abgasreinigungskomponente bei einer Versorgungsspannung von über 24 V ermöglichen.

Gelöst werden diesen Aufgaben mit einer Vorrichtung und einem Verfahren gemäß den Merkmalen der unabhängigen Patentansprüche. Vorteilhafte Weiterbildungen sind in den jeweiligen abhängigen Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die Aufgaben werden gelöst durch eine Vorrichtung zur Behandlung, insbesondere katalytischen Umsetzung, von Abgasen in einem Abgassystem mit einem ersten in einem Mantelrohr angeordneten, von einem Abgas durchströmbaren Wabenkörper, wobei der Wabenkörper mindestens eine Stromleitstruktur aufweist, begrenzt von Spalten und/oder Isolierschichten, die eine Isolierung auch unter Betriebsbedingungen für Spannungen größer 24 V, insbesondere größer 48 V, bewirken.

Die Vorrichtung ist bevorzugt in einem Abgasnachbehandlungssystem einer Verbrennungskraftmaschine eines Kraftfahrzeugs, insbesondere eines Otto-Motors oder eines Diesel-Motors angeordnet, wobei das Mantelrohr bevorzugt die Abgasleitung des Abgasnachbehandlungssystems bildet. Der Wabenkörper weist bevorzugt eine Vielzahl von sich in Strömungsrichtung des Abgases ersteckenden Kanälen auf. Die Kanälwände können mit strömungsbeeinflussenden Strukturen, mit einer Porosität und/oder mit Öffnungen ausgeführt sein. Ganz besonders bevorzugt ist der durchströmbare Wabenkörper aus einer Vielzahl von metallischen Folien hergestellt, die zumindest teilweise strukturiert und/oder gewellt ausgeführt sind. Die metallischen Folien können gestapelt und/oder gewickelt bzw. umeinander verschlungen sein und bilden die Kanälwände aus. Es ist ganz besonders bevorzugt, dass die Lagen aus abwechselnden strukturierten und glatten Folien gebildet sind.

Insbesondere mindestens eine dieser metallischen Folien ist als Stromleitstruktur gegenüber benachbarten metallischen Folien isoliert ausgeführt und weist elektrische Kontakte zum Anschließen einer Spannungsquelle außerhalb des Mantelrohres auf. Um einen genügend hohen elektrischen Widerstand in der Stromleitstruktur zu erreichen, weist die Stromleitstruktur bevorzugt einen möglichst langen Strompfad auf, wie er beispielsweise durch eine mäanderförmige Gestaltung erzielt wird. Dies hat allerdings relativ feine Isolierstrukturen zur Folge. Erfindungsgemäß weisen diese eine solche Größe auf beziehungsweise sind mit einem solchen Isoliermaterial versehen, so dass bei einer angelegten Spannung von mehr als 24 V, insbesondere bis zu mehr als 48 V oder sogar 60 V, keine elektrischen Überschläge entstehen können. Dies wird insbesondere durch eine Spaltgröße von mindestens 1 mm [Millimeter] erreicht.

Im Prinzip können viele der bekannten Bauformen von elektrisch beheizbaren Wabenkörpern, insbesondere auch aus elektrisch leitfähigem Material extrudierte Wabenkörper, so verändert werden, dass die Isolierung den erhöhten Anforderungen entspricht. Dabei sind vor allem die Dimensionen und Materialien der Isolierung anzupassen. Es ist aber auch darauf zu achten, dass die Isolierung bei Betriebsbelastungen haltbar und funktionsfähig bleibt. In Abgasanlagen sind Wabenkörper starken thermischen Wechselbelastungen mit entsprechenden Dehnungen ausgesetzt und Ablagerungen können zu Kurzschlüssen führen. Für solche Belastungen muss die Isolierung ausgelegt sein.

Gemäß der Erfindung weist die Vorrichtung ein Steuergerät auf, wobei das Steuergerät dafür eingerichtet ist, eine gepulste Spannung zu erzeugen und diese an die Stromleitstruktur anzulegen. Mit einem solchen Steuergerät wird ermöglicht, die elektrische Leistung diskontinuierlich der Stromleitstruktur zuzuführen, so dass die durch die Pulse zugeführte Energie durch die Pulsbreite und/oder die Pulswiederholfrequenz eingestellt werden kann. Bei dem Einsatz eines solchen Steuergeräts können auch Stromleitstrukturen mit einer Bordspannung von beispielsweise 48 V betrieben werden, die ursprünglich nicht für so hohe Spannungen ausgelegt waren. Bei genügend kurzen Pulsen und geeignet niedriger Wiederholfrequenz ist ein Schmelzen nicht zu befürchten. Sogar sich eventuell ausbildende Lichtbogen bei Schäden an der Isolierung werden durch das gepulste Anlegen der Spannung immer wieder gelöscht.

Bei der erfindungsgemäßen Vorrichtung weist die Stromleitstruktur einen elektrischen Widerstand zwischen 0,001 Ω [Ohm] und 0,8 Ω, ganz besonders bevorzugt zwischen 0,05 Ω und 0,3 Ω auf. Um einer Stromleitstruktur bei einer konstanten Spannung von 48 V eine Leistung von 1000 W [Watt] zuzuführen, müsste diese einen Widerstand von ungefähr 2,3 Ω aufweisen. Entsprechend müsste für eine konstant zugeführte Leistung von 500 W oder 2000 W, die Stromleitstruktur einen Widerstand von 4,6 Ω beziehungsweise von 1,2 Ω aufweisen. Gemäß der vorliegenden Erfindung reicht es aber beispielsweise bei einem Widerstand der Stromleitstruktur von 0,5 Ω aus, wenn eine gepulste Spannung mit einer Spannungshöhe von 48 V bei angelegter Spannung nur für etwas mehr als ein Fünftel (1/5) der Zeit im Vergleich zur nicht eingeschalteten Spannung anliegt, um in einem zeitlich gemittelten Durchschnitt eine Leistung von etwa 1000 W zuzuführen. Dies wird beispielsweise bei einer gepulsten Rechteckspannung mit einer Pulsdauer von 0,11 s [Sekunde] und einem Pulsabstand von 0,5 s, also einer Wiederholrate von 2 Hz [Hertz], erreicht.

Einem weiteren Aspekt der Erfindung folgend wird ein Verfahren zum Betreiben eines elektrisch beheizbaren und für ein Abgas durchströmbaren Wabenkörpers mit wenigstens einer Stromleitstruktur vorgeschlagen, bei dem zum Aufheizen des Wabenkörpers eine stromerzeugende Spannung größer 24 V an die Stromleitstruktur angelegt wird, wobei die Spannung eine gepulste Spannung ist.

Unter einer gepulsten Spannung wird eine Spannung verstanden, die zwischen der Spannung Null und einem maximalen Spannungswert periodisch ansteigt und wieder abfällt. Eine gepulste Spannung ist bevorzugt eine Rechteckspannung oder eine Sägezahnspannung. Mit dem gepulsten Einbringen der elektrischen Leistung in die Stromleitstruktur wird Energie nur diskontinuierlich der Stromleitstruktur zugeführt, so dass der Leistungseintrag auch in Stromleitstrukturen mit geringem Widerstand bei hoher maximaler Spannung in einem gewünschten Bereich gehalten werden kann.

Bei dem erfindungsgemäßen Verfahren wird die gepulste Spannung mit einer Wiederholrate von 0,1 Hz [Hertz] bis 1000 Hz, besonders bevorzugt von 1 Hz bis 100 Hz, angelegt. Mit Wiederholrate ist der Kehrwert der Zeit zwischen einem Anstieg der Spannung bis zu dem nächsten Anstieg der Spannung des nächsten Pulses gemeint. Die in die Stromleitstruktur eingebrachte Energie kann somit über eine Frequenzmodulation bei gleichbleibender Pulslänge erfolgen.

Beim Anlegen einer Rechteckspannung ist bevorzugt, dass jeder Puls eine Pulsdauer von 0,001 s [Sekunde] bis 1 s, besonders bevorzugt von 0,005 s bis 0,5 s, aufweist. Auf diese Weise wird ermöglicht, dass die in die Stromleitstruktur eingebrachte Energie durch eine Pulsbreitenmodulation angepasst werden kann.

Ganz besonders bevorzugt hat die gepulste Spannung eine Spannungshöhe von ungefähr 48 V. Damit ist gemeint, dass die maximale Spannung gepulste Spannung nach dem periodischen Ansteigen einen Wert zwischen 46 V bis 50 V, insbesondere etwa 48 V, aufweist.

In einer vorteilhaften Ausführungsform des erfindungsgemäßen Verfahrens wird die Pulsdauer und/oder die Wiederholrate in Abhängigkeit von Abgasparametern, insbesondere in Abhängigkeit von der Abgastemperatur, eingestellt. Auf diese Weise kann gerade die elektrische Energie der Stromleitstruktur zugeführt werden, die benötigt wird, um das Abgas und/oder den Wabenkörper auf eine erforderliche Temperatur zu erhöhen. Es kann somit ein effizientes Aufheizen stattfinden. Dabei können Regelkreise mit der Pulsbreite und/oder der Wiederholrate als Stellgröße(n) gebildet werden.

Die für das erfindungsgemäße Verfahren offenbarten Details und Vorteile lassen sich auf die erfindungsgemäße Vorrichtung übertragen und anwenden und umgekehrt. Die Erfindung sowie das technische Umfeld werden nachfolgend anhand der Figuren beispielhaft erläutert. Es ist darauf hinzuweisen, dass die Figuren besonders bevorzugte Ausführungsvarianten der Erfindung zeigen, diese jedoch nicht darauf beschränkt ist. Es zeigen schematisch:
- Fig. 1:: ein Kraftfahrzeug mit einer erfindungsgemäßen Vorrichtung,
- Fig. 2:: einen Ausschnitt einer Stromleitstruktur,
- Fig. 3:: eine erste Schaltung zur Spannungsversorgung einer Stromleitstruktur,
- Fig. 4:: eine zweite Schaltung zur Spannungsversorgung einer Stromleitstruktur,
- Fig. 5:: eine dritte Schaltung zur Spannungsversorgung einer Stromleitstruktur,
- Fig. 6:: Spannungsverlauf bei einer Frequenzmodulation,
- Fig. 7:: Spannungsverlauf bei einer Pulsbreitenmodulation.

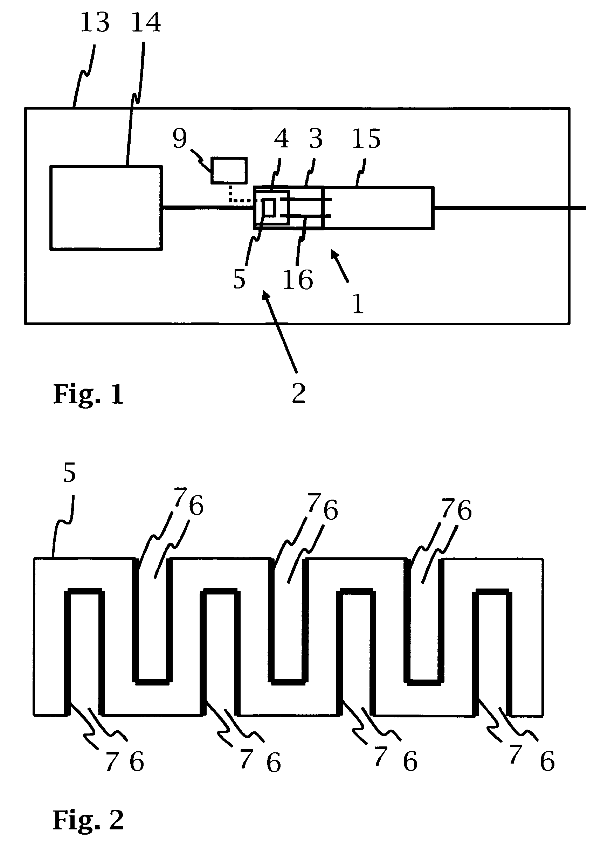

Fig. 1 zeigt schematisch ein Kraftfahrzeug 13 mit einer Verbrennungskraftmaschine 14, an die ein Abgassystem 2 angeschlossen ist, in dem eine erfindungsgemäße Vorrichtung 1 angeordnet ist. Die Vorrichtung 1 umfasst einen ersten Wabenkörper 4, der in einem Mantelrohr 3 angeordnet ist, und in dem eine Stromleitstruktur 5 ausgebildet ist. Die Stromleitstruktur 5 ist mit einem Steuergerät 9 verbunden. In dem Mantelrohr 3 ist ferner ein zweiter Wabenkörper 15 angeordnet. Der erste Wabenkörper 4 und der mit Abstand dahinter angeordnete zweite Wabenkörper 15 sind über Stützelemente 16 verbunden, die in die Wabenkörper 4, 15 hineinragen und die im ersten Wabenkörper 4 in Hülsen unter Zwischenschaltung einer elektrischen Isolierung angeordnet sind.

Die Stromleitstruktur 5 ist mit Spalten 6 und Isoliermaterial 7 in einer solchen Weise ausgelegt, dass sich bei einer angelegten Spannung von z. B. 48 V im Betrieb keine Lichtbogen ausbilden. Zudem kann im Betrieb eine gepulste Spannung an die Stromleitstruktur 5 angelegt werden, so dass die zugeführte elektrische Energie an die Stromleitstruktur 5 und die gewünschte Abgastemperatur angepasst werden können.

Fig. 2 stellt schematisch einen Ausschnitt einer Stromleitstruktur 5 dar. Die Stromleitstruktur 5 weist eine mäanderförmige Gestalt auf. Dadurch sind Spalte 6 in der Stromleitstruktur 5 vorhanden. In diesem Ausführungsbeispiel ist die Stromleitstruktur 5 hin zu den Spalten 6 mit Isoliermaterial 7 beaufschlagt. Die Spalten 6 und das Isoliermaterial 7 sind so ausgelegt, dass sich bei einer angelegten Spannung von z. B. 48 V keine Kurzschlüsse, insbesondere durch Lichtbogen, ausbilden können.

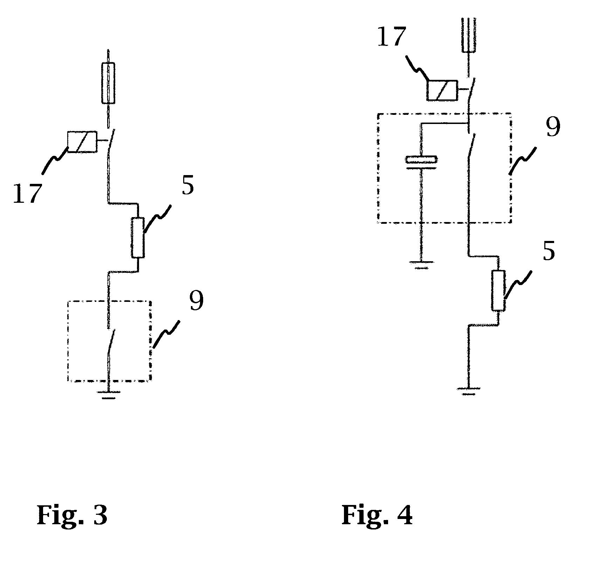

Die Fig. 3 bis 5 zeigen schematisch die elektrische Beschaltung einer Stromleitstruktur 5. Die Energieversorgung erfolgt in der Regel durch eine Batterie des Kraftfahrzeugs 13. Die Schaltungen weisen einen Hauptschalter 17 und ein Steuergerät 9 auf. Der Hauptschalter 17 schaltet prinzipiell die Energieversorgung während des Betriebs der Verbrennungskraftmaschine 14 ein, während ein dem Steuergerät 9 zugeordnetes Stellmittel der Beeinflussung der an die Stromleitstruktur 5 angelegten Spannung im Betrieb dient. So kann über das Steuergerät 9 eine gepulste Spannung erzeugt werden, die an der Stromleitstruktur 5 anliegt.

Bei der in Fig. 3 dargestellten Beschaltungsform kann das Steuergerät 9 die Spannungsversorgung zwischen Stromleitstruktur 5 und Masse beeinflussen.

Bei dem in Fig. 4 dargestellten Schaltbild kann das Steuergerät 9 die Spannungsversorgung zwischen Batterie und Stromleitstruktur 5 beeinflussen.

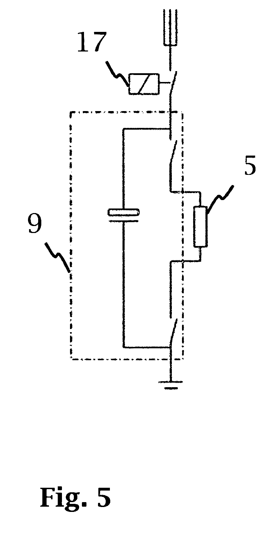

Bei der in Fig. 5 dargestellten Schaltungsanordnung kann das Steuergerät 9 sowohl zwischen Stromleitstruktur 5 und Batterie als auch zwischen Stromleitstruktur 5 und Masse die angelegte Spannung variieren.

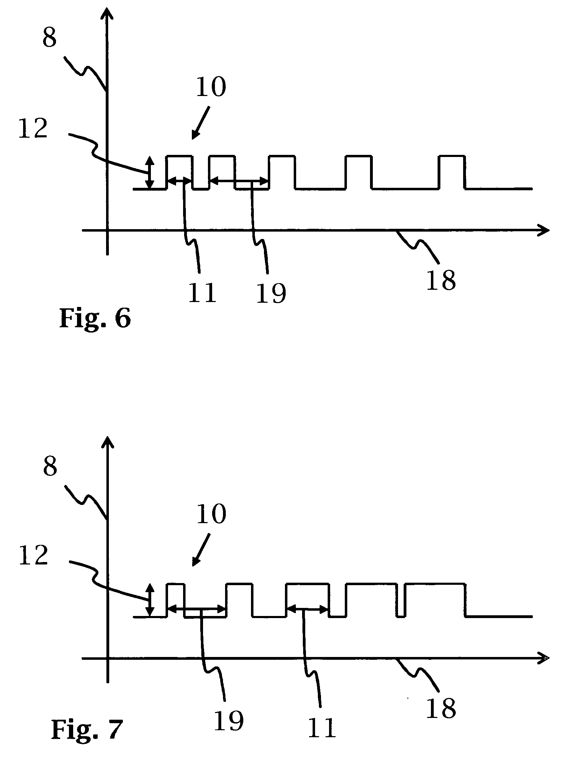

Fig. 6 und 7 stellen beispielhaft die Einstellungsmöglichkeiten der einer Stromleitstruktur 5 zuführbaren Energie über eine gepulste Spannung 8 dar. Hierzu ist die Spannung 8 über die Zeit 18 aufgetragen. Die Pulse 10, die hier als Rechteckpulse ausgeführt sind, weisen eine maximale Spannungshöhe 12 mit einer Pulsdauer 11 und einem Pulsabstand 19 zueinander auf. In Fig. 6 ist das Prinzip einer Frequenzmodulation dargestellt. Die Pulse 10 werden mit einer konstanten Pulsdauer 11 bei unterschiedlichem Pulsabstand 19 wiederholt. Auf diese Weise lässt sich durch Einstellen der Wiederholfrequenz, also dem Kehrwert des Pulsabstands 19, die der Stromleitstruktur 5 pro Zeiteinheit zugeführte Energie einstellen.

Im Gegensatz dazu ist in Fig. 7 eine Pulsbreitenmodulation angedeutet. Die Pulse 10 mit einer Spannungshöhe 12 und einer Pulsdauer 11 werden zwar mit gleichem Pulsabstand 19 erzeugt, doch wird die Pulsdauer 11 variiert. Somit lässt sich die der Stromleitstruktur 5 zugeführte Energie über die Pulsdauer einstellen. Es ist auch möglich, dass sowohl die Pulsdauer 11 als auch der Pulsabstand 19 variiert werden.

Mit der erfindungsgemäßen Lehre ist es möglich, Heizelemente in einem Abgassystem mit einer Bordspannung von 48 V oder sogar 60 V zu versorgen. Insbesondere wird ein Verfahren bereitgestellt, mit dem eine Nutzung von Heizelementen, deren elektrischer Widerstand nicht genügend erhöht werden kann, mit einer hohen Betriebsspannung möglich wird.
- 1: Vorrichtung
- 2: Abgassystem
- 3: Mantelrohr
- 4: erster Wabenkörper
- 5: Stromleitstruktur
- 6: Spalt
- 7: Isoliermaterial
- 8: Spannung
- 9: Steuergerät
- 10: Puls
- 11: Pulsdauer
- 12: Spannungshöhe
- 13: Kraftfahrzeug
- 14: Verbrennungskraftmaschine
- 15: zweiter Wabenkörper
- 16: Stützelemente
- 17: Hauptschalter
- 18: Zeit
- 19: Pulsabstand

## Patentansprüche

1. Vorrichtung (1) zur Behandlung von Abgasen in einem Abgassystem (2) mit einem ersten in einem Mantelrohr (3) angeordneten, von einem Abgas durchströmbaren Wabenkörper (4), wobei der Wabenkörper (4) mindestens eine Stromleitstruktur (5) aufweist, begrenzt von Spalten (6) und/oder Isoliermaterial (7), die eine Isolierung auch unter Betriebsbedingungen für Spannungen (8) größer 24 V (Volt), insbesondere größer 48 V, bewirken; und umfassend ein Steuergerät (9), wobei das Steuergerät (9) dafür eingerichtet ist, eine gepulste Spannung (8) von mindestens 24 V, vorzugsweise zwischen 48 und 60 V zu erzeugen und diese an die Stromleitstruktur (5) anzulegen; wobei die Stromleitstruktur (5) einen elektrischen Widerstand zwischen 0.001 Ω (Ohm) und 0,8 Ω, ganz besonders bevorzugt zwischen 0,05 Ω und 0,3 Ω, aufweist.

2. Verfahren zum Betreiben eines elektrisch beheizbaren und für ein Abgas durchströmbaren Wabenkörpers (4) mit wenigstens einer Stromleitstruktur (5), an die zum Aufheizen des Wabenkörpers (4) eine Strom erzeugende Spannung (8) größer 24 V angelegt wird, wobei die Spannung (8) eine gepulste Spannung ist; wobei die Stromleitstruktur (5) einen elektrischen Widerstand zwischen 0,001 Ω (Ohm) und 0,8 Ω, ganz besonders bevorzugt zwischen 0,05 Ω und 0,3 Ω, aufweist, wobei die gepulste Spannung (8) mit einer Wiederholrate von 0,1 Hz (Hertz) bis 1000 Hz, vorzugsweise 1 Hz bis 100 Hz, angelegt wird; wobei jeder Puls (10) eine Pulsdauer (11) von 0,005 s (Sekunden) bis 0,5 s aufweist.

3. Verfahren nach Anspruch 2, wobei die gepulste Spannung (8) eine maximale Spannungshöhe (12) zwischen 48 V und 60 V hat.

4. Verfahren nach Anspruch 2 oder 3, wobei die Pulsdauer und/oder die Wiederholrate in Abhängigkeit von Abgasparametern eingestellt werden, insbesondere der Abgastemperatur.

## Claims

1. Device (1) for treating exhaust gases in an exhaust system (2) having a first honeycomb body (4) which is arranged in a casing tube (3) and through which an exhaust gas can flow, wherein the honeycomb body (4) has at least one current-conducting structure (5), bounded by gaps (6) and/or insulating material (7) which bring about insulation even under operating conditions for voltages (8) higher than 24 V (volts), in particular higher than 48 V; and comprising a control unit (9), wherein the control unit (9) is configured to generate a pulsed voltage (8) of at least 24 V, preferably between 48 and 60 V, and to apply said voltage to the current-conducting structure (5); wherein the current-conducting structure (5) has an electrical resistance between 0.001 Ω (Ohms) and 0.8 Ω, quite particularly preferably between 0.05 Ω and 0.3 Ω.

2. Method for operating an electrically heatable honeycomb body (4) through which an exhaust gas can flow and which has at least one current-conducting structure (5) to which a voltage (8) which is higher than 24 V and which generates current is applied in order to heat the honeycomb body (4), wherein the voltage (8) is a pulsed voltage; wherein the current-conducting structure (5) has an electrical resistance between 0.001 Ω (Ohms) and 0.8 Ω, quite particularly preferably between 0.05 Ω and 0.3 Ω, wherein the pulsed voltage (8) is applied with a repetition rate of 0.1 Hz (Hertz) to 1000 Hz, preferably 1 Hz to 100 Hz; wherein each pulse (10) has a pulse length (11) of 0.005 s (seconds) to 0.5 s.

3. Method according to Claim 2, wherein the pulsed voltage (8) has a maximum voltage level (12) between 48 V and 60 V.

4. Method according to Claim 2 or 3, wherein the pulse length and/or the repetition rate are adjusted as a function of exhaust gas parameters, in particular the temperature of the exhaust gas.

## Revendications

1. Dispositif (1) destiné au traitement de gaz d'échappement dans un système (2) de gaz d'échappement, avec un premier corps alvéolé (4) placé dans un premier tube d'enveloppe (3), susceptible d'être traversé par des gaz d'échappement, le corps alvéolé (4) comportant au moins une structure (5) conductrice de courant, délimitée par des interstices (6) et/ou de la matière isolante (7) qui assurent une isolation également dans des conditions de service pour des tensions (8) supérieures à 24 V (volts), notamment supérieures à 48 V ; et comprenant un instrument de commande (9), l'instrument de commande (9) étant aménagé pour créer une tension (8) pulsée d'au moins 24 V, de préférence comprise entre 48 et 60 V et pour l'appliquer à la structure (5) conductrice de courant ; la structure (5) conductrice de courant présentant une résistance électrique comprise entre 0,001 Ω (ohm) et 0,8 Ω, de manière particulièrement préférée, comprise entre 0,05 Ω et 0,3 Ω.

2. Procédé destiné à faire fonctionner un corps alvéolé (4) susceptible d'être chauffé électriquement et d'être traversé par des gaz d'échappement, avec au moins une structure (5) conductrice de courant, sur laquelle pour chauffer le corps alvéolé (4), est appliquée une tension (8) supérieure à 24 V générant du courant, la tension (8) étant une tension pulsée ; la structure (5) conductrice de courant présentant une résistance électrique comprise entre 0,001 Ω (ohm) et 0,8 Ω, de manière particulièrement préférée, comprise entre 0,05 Ω et 0,3 Ω, la tension (8) pulsée étant appliquée avec un taux de répétition de 0,1 Hz (hertz) à 1000 Hz, de préférence de 1 Hz à 100 Hz ; chaque impulsion (10) présentant une durée d'impulsion (11) de 0,005 s (secondes) à 0,5 s.

3. Procédé selon la revendication 2, la tension (8) pulsée ayant une valeur maximale de tension (12) comprise entre 48 V et 60 V.

4. Procédé selon la revendication 2 ou la revendication 3, la durée d'impulsion et/ou le taux de répétition étant réglés en fonction des paramètres des gaz d'échappement, notamment de la température des gaz d'échappement.
